# EUROPÄISCHE PATENTANMELDUNG

(11) **EP 1 801 675 A1**
(43) Veröffentlichungstag der Anmeldung: **27.06.2007**
(21) Anmeldenummer: 06022785.7
(22) Anmeldetag: 02.11.2006
(51) Int. Cl.: G05B 19/042, G05B 19/05, H04L 12/40, H04L 12/437, G05B 9/02

(54) **Vorrichtung und Verfahren zur sicherheitsgesteuerten Abschaltung eines Segmentkreises in einem Feldbus**

(30) Priorität: 21.12.2005 DE 102005061152
(71) Anmelder: Bosch Rexroth AG, 70184 Stuttgart (DE)
(72) Erfinder: Boesche, Günter, 64720 Michelstadt (DE)

(57) **Zusammenfassung**

Es wird eine Vorrichtung (501) zur sicherheitsgerichteten Abschaltung eines Segmentkreises (120) in einem Feldbus (105c), insbesondere Inline Bus (105c) vorgestellt, mit wenigstens einem Spannungseingang (502) und wenigstens einem Masseeingang (503), wobei der Segmentkreis (120) über die Vorrichtung (501) mit dem wenigstens einen . Spannurigseingang (502) und dem wenigstens einen Masseeingang (503) verbunden ist. Die Vorrichtung weist ein erstes Schaltelement (505a) zum Unterbrechen einer Verbindung zwischen dem Spannungseingang (502) und dem Segmentkreis (120) und ein zweites Schaltelement (505b) zum Unterbrechen der Verbindung zwischen dem Masseeingang (503) und dem Segmentkreis (120) auf. Eine zweite Vorrichtung weist wenigstens einen Spannungseingang (302), mit dem der Segmentkreis (120) über eine erste Verbindung (210) verbunden ist, ein erstes Schaltelement (305a) zum Unterbrechen der ersten Verbindung (210) zwischen dem Spannungseingang (302) und dem Segmentkreis (120) und ein zweites Schaltelement (305b) zum Unterbrechen einer zweiten Verbindung (310) zwischen dem Spannungseingang (302) und dem Segmentkreis (120) auf. Weiterhin wird ein entsprechendes Verfahren vorgestellt. Mit der erfindungsgemäßen Lösung kann eine erhöhte Sicherheit erreicht werden.

## Beschreibung

Die vorliegende Erfindung betrifft eine Vorrichtung sowie ein Verfahren zur sicherheitsgerichteten Abschaltung eines Segmentkreises in einem Feldbus nach den Oberbegriffen der unabhängigen Patentansprüche.

### Stand der Technik

Zur Anwendung kommen Vorrichtungen zur sicherheitsgerichteten Abschaltung eines Segmentkreises in einem Feldbus immer dann, wenn in einer Feldumgebung Gefahrenstellen vorhanden sind. Dabei handelt es sich insbesondere um Maschinen mit Gefährdungspotential wie z. B. Pressen, Druckmaschinen, Metallschneider, Brennöfen, Roboterschwenkarme usw. Zum Schutz des Bedienungspersonals und der Maschinen existieren internationale Sicherheitsnormen (SIL, Safety Integrity Level) verschiedener Stufen, die verschiedene Sicherheitsvorkehrungen vorschreiben. Beispielsweise erfordert die prEN ISO 13849-1 für Kategorie3-Anwendungen eine durchgehende zweikanalige Struktur. In dieser Kategorie darf weiterhin ein einzelner Fehler nicht zum Verlust der Sicherheitsfunktion führen.

Speziell in einer Feldbusumgebung kommen dabei sogenannte Sicherheitsklemmen zum Einsatz, die ein sicherheitsgerichtetes Abschalten eines angeschlossenen Segmentkreises ermöglichen. Bei einer zweikanaligen Ausführung sind dabei die sicherheitsrelevanten Elemente innerhalb des Sicherheitskreises doppelt ausgeführt. Beispielsweise weist die Sicherheitsklemme IB IL 24 Safe 1 der Firma Phoenix Contact eine doppelt ausgeführte Abschaltung der Spannungsversorgung für den Segmentkreis auf. Zum Bereitstellen der Sicherheitsfunktionalität im Segmentkreis dürfen nach Herstellervorschrift nur dafür zugelassene Klemmen (Eingangs-, Ausgangsklemmen usw.) verwendet werden. Fehler außerhalb dieser Klemmen werden nicht betrachtet oder unter Auflagen, z. B. DIN EN ISO 13849-2/Anhang D/Tabelle D5/Leitungen/Kabel, als Fehlerausschluss spezifiziert.

Nachteilig an dieser Lösung ist, dass durch den vorgeschriebenen Fehlerausschluss ein erhöhter Verkabelungsaufwand notwendig ist, wobei eine Fehlverkabelung oder eine Nichtbeachtung des Fehlerausschlusses trotzdem nicht auszuschließen ist. Beispielsweise führt ein Kurzschluss gegen die Spannungsversorgung im Ausgangskreis der Ausgangsklemme zu einem Verlust der Sicherheitsfunktion. Zusätzlich sind speziell zugelassene und damit teuere Klemmen notwendig.

Es stellt sich somit das Problem, den genannten Stand der Technik zu verbessern und eine Vorrichtung sowie ein Verfahren zur sicherheitsgerichteten Abschaltung eines Segmentkreises in einem Feldbus bereitzustellen, wobei auch bei Fehlschlüssen die Sicherheitsfunktionalität erhalten bleibt.

Erfindungsgemäß werden eine Vorrichtung sowie ein Verfahren zur sicherheitsgerichteten Abschaltung eines Segmentkreises in einem Feldbus gemäß den Merkmalen der unabhängigen Patentansprüche vorgestellt.

### Vorteile der Erfindung

Die erste erfindungsgemäße Vorrichtung zur sicherheitsgerichteten Abschaltung eines Segmentkreises in einem Feldbus, eine sog. Sicherheitsklemme, insbesondere für einen Inline Bus, weist wenigstens einen Spannungseingang und wenigstens einen Masseeingang auf, wobei der Segmentkreis über die Vorrichtung mit dem wenigstens einen Spannungseingang und dem wenigstens einen Masseeingang verbunden ist. Es ist ein erstes Schaltelement zum Unterbrechen einer Verbindung zwischen dem Spannungseingang und dem Segmentkreis vorgesehen. Die Sicherheitsklemme weist weiterhin ein zweites Schaltelement zum Unterbrechen der Verbindung zwischen dem Masseeingang und dem Segmentkreis auf. Die zweite erfindungsgemäße Vorrichtung weist einen Spannungseingang, mit dem der Segmentkreis über eine erste Verbindung verbunden ist, und ein erstes Schaltelement zum Unterbrechen der ersten Verbindung zwischen dem Spannungseingang und dem Segmentkreis auf. Sie weist weiterhin ein zweites Schaltelement zum Unterbrechen einer zweiten Verbindung zwischen dem Spannungseingang und dem Segmentkreis auf. Der sicherheitsgerichtete Segmentkreis beginnt mit der Sicherheitsklemme und endet mit der letzten Klemme vor einer erneuten Einspeisung oder mit dem Stationsende. Es versteht sich, dass mittels der erfindungsgemäßen Vorrichtung auch mehrmals ein Segmentkreis abschaltbar sind. Im Gegensatz zum Stand der Technik, bei dem eine Spannungsversorgung doppelt mittels zweier Schaltelemente unterbrochen wird, wird eine zweikanalige Abschaltung des Versorgungskreises erreicht, in dem sowohl die Spannungsversorgung als auch die Masseversorgung bzw. - zuleitung oder zwei Spannungsversorgungen sicherheitsgerichtet unterbrochen werden. Damit ist es vorteilhaft möglich, auch bei einem Kurzschluss gegen die Spannungsversorgung oder einem Querschluss zwischen den Ausgangskreisen eine sicherheitsgerichtete Abschaltung des Segmentkreises durchzuführen. Diese Abschaltung ist vorteilhaft auch dann möglich, wenn für einen zweikanaligen Segmentkreis nur eine Ausgangsklemme verwendet wird. Bevorzugterweise weist die Spannungsleitung 24 V auf. Es handelt sich dabei um einen verbreiteten Standard, so dass die erfindungsgemäße Vorrichtung einfach in vorhandene Busse integriert werden kann. Weiterhin von Vorteil ist, dass die Sicherheitsklemme in Verbindung mit Standard-Feldbusklemmen verwendbar ist.

Vorteilhafte Weiterbildungen sind Gegenstand der Unteransprüche und der nachfolgenden Beschreibung.

Bevorzugterweise sind wenigstens zwei Mikrocontroller zur Steuerung der Schaltelemente vorgesehen. Damit kann auf einfache Weise eine Sicherheitsfunktionalität mit einer vorbestimmten Sicherheitsstufe erreicht werden.

Ebenso bevorzugt ist wenigstens ein Mikrocontroller zur Steuerung je eines Schaltelements vorgesehen. Bei dieser bevorzugten Ausgestaltung sind nur zwei Mikrocontroller notwendig, um alle im sicherheitsgerichteten Segmentkreis angeschlossenen Klemmen sicherheitsgerichtet abzuschalten. Im Stand der Technik ist bzw. sind in gewissen Situation mit zwei Mikrocontrollern nur eine Ausgangsklemme bzw. zwei Ausgangsklemmen sicherheitsgerichtet abschaltbar.

Es ist zweckmäßig, wenn wenigstens ein Schaltelement als Halbleiterschalter ausgebildet ist. Halbleiterschalter können bei geringer Leistungsaufnahme hohe Leistungen schalten und sind daher besonders bevorzugt zu verwenden. Zweckmäßigerweise ist bei der Erfindung der Halbleiterschalter als unipolarer Transistor, insbesondere als FET, MOSFET oder IGBT, ausgebildet. Diese Transistoren erlauben mit geringer Schaltleistung das Schalten großer Ströme. Der Halbleiterschalter kann aber ebenso als bipolarer Transistor ausgebildet sein.

Es ist von Vorteil, wenn eine erfindungsgemäße Vorrichtung zur Verbindung mit Feldbusklemmen ausgebildet ist. Sie weist daher insbesondere interne und/oder externe Spannungsversorgungs- und Masseversorgungsausgänge auf. Dadurch kann die erfindungsgemäße Sicherheitsklemme besonders einfach in bestehende Feldbusanordnungen integriert werden. Die Ausgänge können dabei intern bzw. busintern ausgebildet sein, um z.B. Eingangsklemmen, Ausgangsklemmen usw. im nachfolgenden Segmentkreis zu versorgen. Die Klemmen können aber auch extern, d.h. zur Verkabelung mit Einspeiseklemmen usw., ausgebildet sein. Der sicherheitsgerichtete Segmentkreis beginnt in beiden Fällen mit der Sicherheitsklemme und endet mit der letzten Klemme vor einer erneuten Einspeisung oder mit dem Stationsende.

Bevorzugterweise weist die erfindungsgemäße Vorrichtung Testelemente zur Fehleraufcleckung, beispielsweise zum Durchführen einer Hellschaltung und/oder einer Dunkelschaltung auf. Damit können schnell und zuverlässig Fehlfunktionen erkannt werden.

Bei dem erfindungsgemäßen Verfahren zur sicherheitsgerichteten Abschaltung eines Segmentkreises in einem Feldbus, insbesondere Inline Bus, wobei der Segmentkreis mit einer Spannung und einer Masse versorgt wird, wobei zur sicherheitsgerichteten Abschaltung die Spannung zum Segmentkreis unterbrochen wird, wird zur sicherheitsgerichteten Abschaltung die Masse zum Segmentkreis unterbrochen. Gemäß einem anderen Verfahren wird eine zweite Spannungsversorgung zum Segmentkreis unterbrochen.

Vorteilhafterweise werden eine erfindungsgemäße Vorrichtung und das erfindungsgemäße Verfahren zum sicherheitsgerichteten Abschalten eines Aktors oder Motors und bevorzugterweise in einem Interbus verwendet.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im folgenden unter Bezugnahme auf die Zeichnung ausführlich beschrieben.

### Figurenbeschreibung

- Figur 1: zeigt schematisch eine Schaltungsanordnung mit einer Vorrichtung zur sicherheitsgerichteten Abschaltung;
- Figur 2: zeigt schematisch einen ersten sicherheitsgerichteten Segmentkreis mit einer Vorrichtung zur sicherheitsgerichteten Abschaltung gemäß dem Stand der Technik;
- Figur 3: zeigt schematisch einen zweiten sicherheitsgerichteten Segmentkreis mit einer ersten bevorzugten Ausgestaltung einer erfindungsgemäßen Vorrichtung zur sicherheitsgerichteten Abschaltung;
- Figur 4: zeigt schematisch einen dritten sicherheitsgerichteten Segmentkreis mit einer Vorrichtung zur sicherheitsgerichteten Abschaltung gemäß dem Stand der Technik; und
- Figur 5: zeigt schematisch einen vierten sicherheitsgerichteten Segmentkreis mit einer weiteren bevorzugten Ausgestaltung einer erfindungsgemäßen Vorrichtung.zur sicherheitsgerichteten Abschaltung.

Gleiche oder gleichwirkende Elemente sind in den Zeichnungen übergreifend mit gleichen Bezugszeichen versehen.

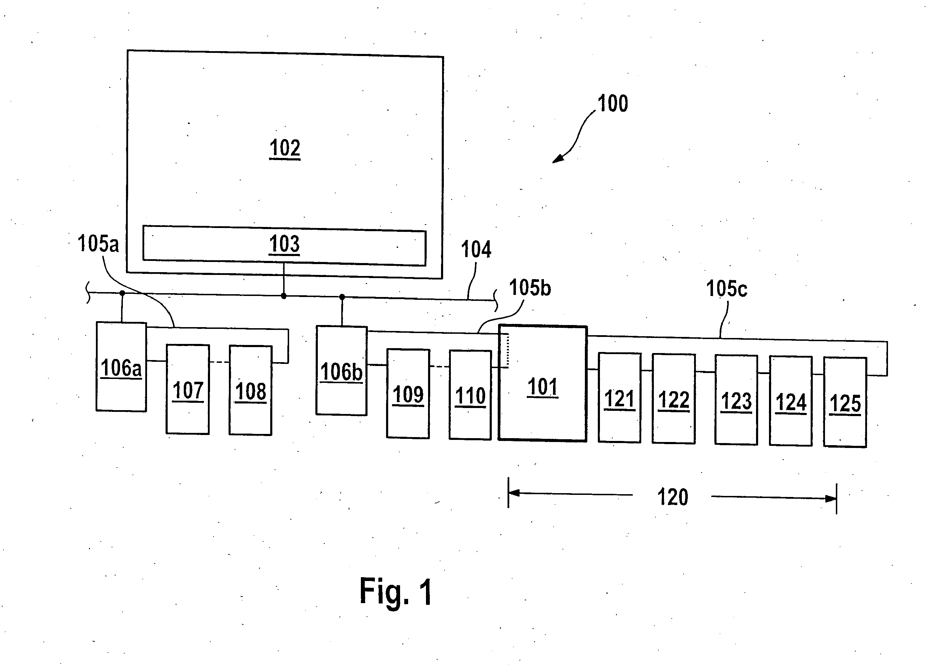

Anhand Figur 1 wird zunächst eine Schaltungsanordnung 100 beschrieben, bei der eine Vorrichtung zur sicherheitsgerichteten Abschaltung 101 verwendet wird.

Die Schaltungsanordnung 100 weist eine programmierbare Sicherheitssteuerung 102 auf, in die ein Feldbusmaster 103 integriert ist. Der Feldbusmaster ist mit einem Feldbus 104 verbunden und stellt die Haupt- bzw. Mastereinheit des Feldbusses 104 dar.

An dem als Masterbus ausgebildeten Feldbus 104 sind Busse 105a, 105b als sog. Slavebusse angekoppelt. Die Ankopplung erfolgt über Feldbusköpfe 106a, 106b. Die Busse 105a, 105b sind in diesem Beispiel als IB-Inline Busse (Interbus Inline Bus) ausgebildet. Für den IB-Inline Bus existieren verschiedene Feldbusköpfe zur Kopplung mit verschiedenen Feldbussen, z. B. Profibus, Devicenet, CAN usw.

Der Inline Bus 105a weist neben dem Feldbuskopf 106a zwei Standard-Feldbusklemmen 107, 108 auf. Der Inline Bus 105b weist neben dem Feldbuskopf 106b zwei Standard-Feldbusklemmen 109, 110 auf. Der Inline Bus 105b weist weiterhin einen sicherheitsgerichteten Segmentkreis 120 auf. ,

Der sicherheitsgerichtete Segmentkreis 120 wird durch die Sicherheitsklemme 101 mit dem Inline Bus 105b verbunden. An die Sicherheitsklemme 101 schließen sich weitere Feldbusklemmen 121 bis 125 an, die über einen Inline Bus 105c verbunden sind.

In diesem Beispiel sind die Feldbusklemmen 121' bis 123 als Eingangsklemmen und die Feldbusklemmen 124 und 125 als Ausgangsklemmen ausgebildet. An die Ausgangsklemmen 124 und 125 werden beispielsweise Aktoren oder Maschinen angeschlossen, die sicherheitsgerichtet abgeschaltet werden müssen.

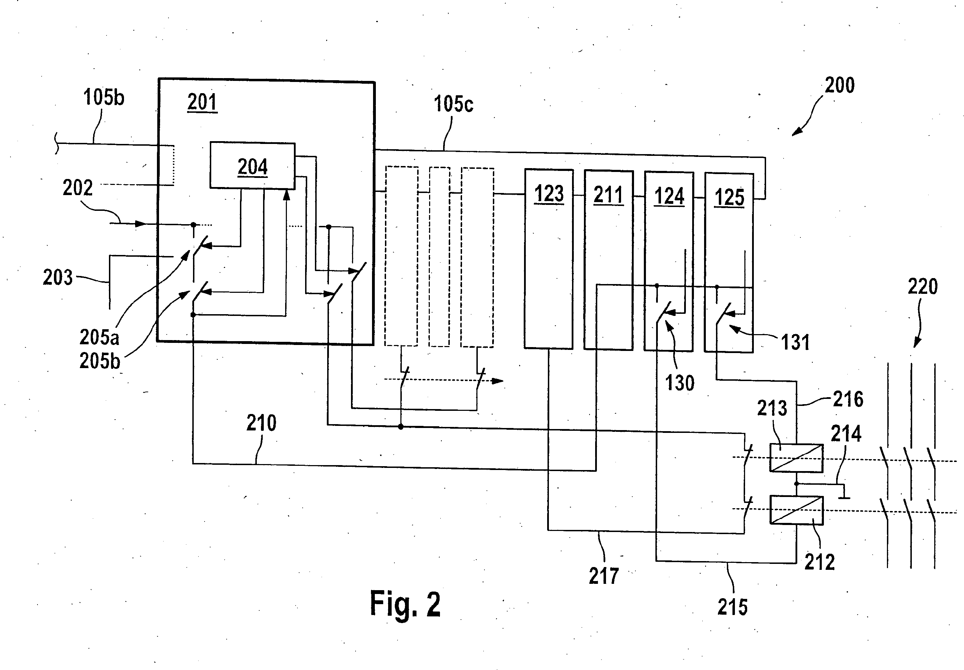

In den Figuren 2 bis 5 sind Klemmen, die nicht beschrieben werden, gestrichelt gezeichnet.

Anhand Figur 2 ist im folgenden erläutert, wie eine derartige Abschaltung im Stand der Technik realisiert wird. In Figur 2 ist ein sicherheitsgerichteter Segmentkreis insgesamt mit 200 bezeichnet. Der sicherheitsgerichtete Segmentkreis 200 wird von einer Sicherheitsklemme 201 eingeleitet. Die Sicherheitsklemme 201 ist eingangsseitig mit dem Inline Bus 105b verbunden. Weiterhin weist die Sicherheitsklemme 201 einen Eingang 202 für die Spannungsversorgung, z.B. 24 V, sowie einen Eingang 203 für die Masseversorgung auf. Die Sicherheitsklemme 201 weist weiterhin eine Steuereinrichtung 204 auf, in der u.a. zwei Mikrocontroller vorgesehen sind. Jeder der beiden Mikrocontroller (nicht gezeigt) ist mit einem Schaltelement 205a bzw. 205b verbunden.

Die Schaltelemente 205a, 205b sind zur Unterbrechung einer. Spannungsversorgungsleitung 210 vorgesehen. Auf diese Weise kann die Spannungsversorgungsleitung 210 mittels der Schaltelemente 205a, 205b und der zugehörigen Mikrocontroller zweifach sicherheitsgerichtet unterbrochen werden. Die Spannungsversorgungsleitung 210 ist mit einer Einspeiseklemme 211 verbunden, die die nachfolgenden Feldbusklemmen mit Spannung und Masse verbindet. Der Einspeiseklemme 211 sind die Ausgangsklemmen 124, 125 nachgeschaltet. Es versteht sich, dass die Ausgangsklemmen ebenso direkt der Sicherheitsklemme 201 nachgeschaltet sein könnten, wobei dann keine Einspeiseklemme verwendet werden muss.

Die Ausgangsklemmen 124 und 125 verbinden die Spannungsversorgungsleitung 210 über Schaltelemente 130 bzw. 131, die über den Inline Bus 105c ansteuerbar sind, mit je einer Ausgangsleitung 215 bzw. 216. Die Ausgangsklemme 124 ist über die Ausgangsleitung 215 mit einem Schaltrelais oder Schütz 212, die Ausgangsklemme 125 über die Ausgangsleitung 216 mit einem Schütz 213 verbunden. Die Schütze sind mit einer Masseleitung 214 verbunden. Die Leitungen 215, 216, 214 stellen die Ausgangskreise dar.

Die Schütze 212, 213 sind zum sicherheitsgerichteten zweifachen Schalten von Versorgungsleitungen 220 einer Maschine bzw. eines Motors (nicht gezeigt) vorgesehen. Um eine zweikanalige Struktur zur sicherheitsgerichteten Abschaltung zu erreichen, wie sie beispielsweise durch die prEN ISO 13849-1 gefordert wird, sind zwei Abschaltepfade vorgesehen.

Zum einen ist die Steuerung über den Inline Bus 105c innerhalb des sicherheitsgerichteten Segmentkreises möglich, wodurch die Schaltelemente 130 und 131 geschalten werden, um die Ausgangsleitungen 215 bzw. 216 von der Spannungsversorgung abzukoppeln. Damit werden die Schütze 212, 213 stromlos geschalten, wodurch sie sich automatisch öffnen und die Leitungen 220 unterbrechen und damit den angeschlossenen Motor (nicht gezeigt) abschalten. Damit wird eine erste sicherheitsgerichtete Abschaltung erreicht.

Als weiterer Abschaltpfad wird die Spannungsversorgungsleitung 210 über die Schaltelemente 205a, 205b unterbrochen. Dann werden die Ausgangsleitungen215 und 216 der Ausgangsklemmen 124 bzw. 125 nicht mehr mit Spannung versorgt. Damit wird eine zweikanalige Struktur zur sicherheitsgerichteten Abschaltung erreicht, wie sie beispielsweise durch die prEN ISO 13849-1 gefordert wird.

Über eine Rückmeldungsleitung 217, die ebenfalls mit den Relais 212, 213 verbunden ist, wird der Sicherheitsklemme 201 über die Eingangsklemme 123 signalisiert, ob die Sicherheitsabschaltung erfolgreich war.

Nachteilig an diesem Stand der Technik ist, dass nicht alle möglichen Fehler sicher erkannt und behoben werden können. Beispielsweise ist bei einem Kurzschluss einer der Ausgangsleitungen 215, 216 gegen die Spannungsversorgung die Unterbrechung der Spannungsversorgungsleitung 210 unwirksam und es nicht möglich, einen Querschluss der Ausgangsleitungen 215, 216 zu erkennen.

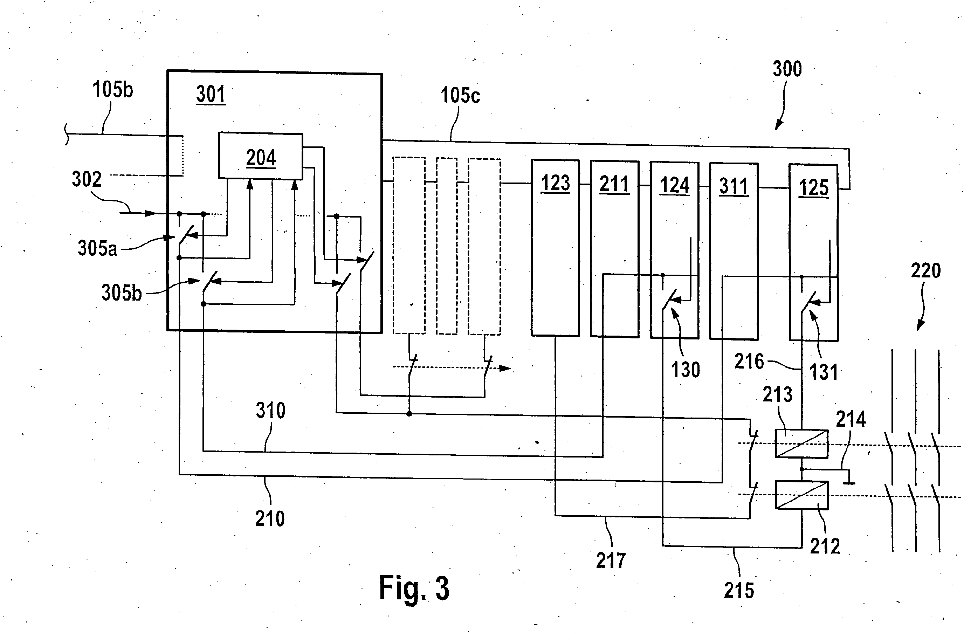

Zur Verbesserung wird daher eine Sicherheitsklemme 301 gemäß Figur 3 vorgeschlagen, die diese Nachteile nicht aufweist. Die Sicherheitsklemme 301 weist Schaltelemente 305a, 305b auf, die in der gezeigten Ausführung als Halbleiterschalter ausgebildet sind und verschiedene Spannungsversorgungsleitungen 210 und 310 abschaltbar mit einem Spannungsversorgungseingang 302 verbinden. Für die Erläuterung der übrigen'Elemente sei an dieser Stelle auf die Beschreibung zu allen anderen Figuren verwiesen.

Die Spannungsversorgungsleitungen 210, 310 werden an Einspeiseklemmen 211, 311 geführt, denen die Ausgangsklemmen 124 bzw. 125 nachgeschaltet sind. Durch die dargestellte Schaltungsanordnung können kritische Fehler wie z. B. Kurzschluss gegen die Spannungsversorgung und Querschluss zwischen den Ausgangskreisen 215, 216 erkannt werden. Dazu können diverse Testmöglichkeiten, insbesondere eine sog. Hell- oder eine Dunkelschaltung verwendet werden.

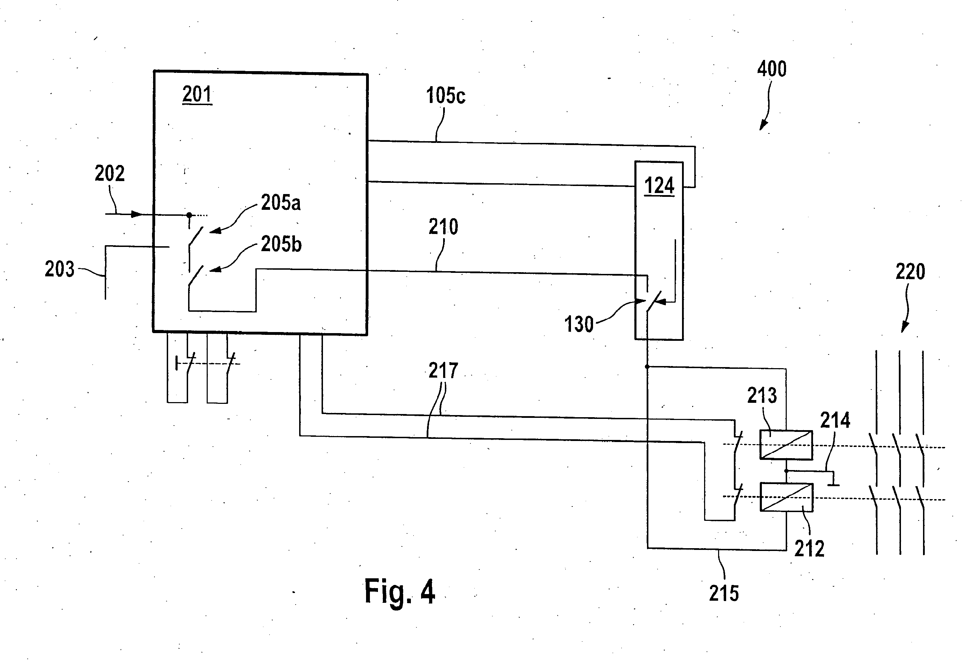

Im Stand der Technik existieren ebenfalls Beispiele, bei denen die sicherheitsgerichtete Abschaltung mittels einer einzigen Ausgangsklemme zugelassen ist. Eine derartige Schaltungsanordnung wird im folgenden unter Bezugnahme auf Figur 4 erläutert.

In Figur 4 ist ein weiterer sicherheitsgerichteter Segmentkreis 400 schematisch dargestellt, wobei nur wesentliche Elemente abgebildet werden. Innerhalb der Sicherheitsklemme 201 sind die Schaltelemente 205a, 205b zum Unterbrechen der Spannungsversorgungsleitung 210 dargestellt. Im abgebildeten Beispiel wird die Spannungsversorgung über die Leitung 210 klemmenintern bis zur Ausgangsklemme 124 geführt. Die Ausgangsklemme 124 ist über die Ausgangsleitung 215 mit den Schützen'212, 213 und diese sind mit der Masseleitung 214 verbunden. Die Schütze sind wiederum zum Unterbrechen der Versorgungsleitungen 220 vorgesehen. Weiterhin sind sie mit einer Rückmeldungs-leitung 217 zum Rückmelden des Schaltzustandes an die Sicherheitsklemme 201 gekoppelt.

Es existieren wiederum zwei Abschaltepfade, mit denen die Versorgungsleitungen 220 abgeschaltet werden können. Zum einen kann die Abschaltung mittels des Schaltelements 130 über den Inline Bus 105c, zum anderen mittels der Schaltelemente 205a, 205b erfolgen, wie es weiter oben bereits ausführlich erläutert wurde. Um die Sicherheitsfunktionalität des Segmentkreises zu gewährleisten, existieren verschiedene vorgeschriebene Sicherheitsausschlüsse, die bei der Verkabelung des Segmentkreises vom Anwender beachtet werden müssen.

Beispielsweise kann vorgeschrieben sein, die Anschlussleitungen 215, 214 für die Schütze zur Vermeidung von Querschlüssen mit getrennten Mantelleitungen zu' verdrahten.

Bei einem Kurzschluss der Verbindungsleitung 215 mit einer Spannungsversorgungsleitung kommt es im gezeigten Beispiel zum Verlust der Sicherheitsfunktion. Trotz Abschalten der Ausgangsklemme 124 können die Schütze 212, 213 nicht mehr abgeschaltet werden.

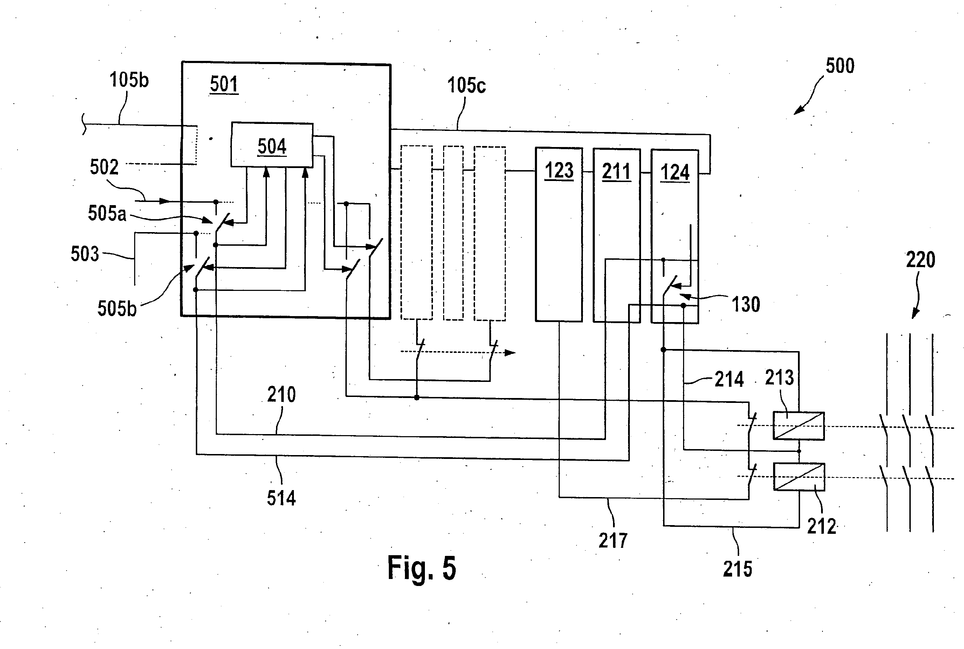

In Figur 5 wird eine bevorzugte Ausführungsform einer erfindungsgemäßen Vorrichtung zur sicherheitsgerichteten Abschaltung eines Segmentkreises gezeigt, die diesen Nachteil nicht aufweist. In Figur 5 ist ein weiterer Segmentkreis insgesamt mit 500 bezeichnet. Er wird von einer bevorzugten Ausführungsform 501 der erfindungsgemäßen Sicherheitsklemme eingeleitet.

Die Sicherheitsklemme 501 weist eine interne Steuereinheit 504 auf, die u.a. zwei Mikrocontroller (nicht gezeigt) enthält. Weiterhin weist die Sicherheitsklemme 501 erste und zweite Schaltelemente 505a; 505b auf, die als Halbleiterschalter ausgebildet sind. Die Sicherheitsklemme 501 ist eingangsseitig mit dem Inline Bus 105b verbunden. Weiterhin weist die Sicherheitsklemme 501 einen Eingang 502 für die Spannungsversorgung, z.B. 24 V, sowie einen Eingang 503 für die Masseversorgung auf. Erfindungsgemäß ist ein Halbleiterschalter 505a zum Unterbrechen der Spannungs-versorgungsleitung 210 ausgebildet, wohingegen der zweite Halbleiterschalter 505b zur Unterbrechung der Masseversorgungsleitung 514 ausgebildet ist. Der sicherheitsgerichtete Segmentkreis weist den Inline Bus 105c auf, über den die Eingangsklemme 123, die Einspeiseklemme 211 und die Ausgangsklemme 124 mit der Sicherheitsklemme 501 verbunden sind. Im vorliegenden Beispiel wird die Versorgung der Ausgangsklemme 124 über die Einspeiseklemme 211 vorgenommen. Es versteht sich, dass ebenso die Ausgangsklemme 124 über interne Klemmenleitungen mit der Versorgungsspannung und der Masseversorgung verbunden werden kann.

Die Ausgangsklemme 124 verbindet die Spannungsversorgungsleitung 210 über das Schaltelement 130, das über den Inline Bus 105c ansteuerbar ist, mit der Ausgangsleitung 215. Ebenso verbindet die Ausgangsklemme 124 die Masseversorgungsleitung 514 mit der Masseleitung 214. Die Leitungen 214 und 215 wiederum sind mit den Schützen 212 und 213 verbunden.

Die Schütze 212, 213 sind auch in der gezeigten Abbildung zweikanalig abschaltbar, wobei der erste Abschaltpfad über den Inline Bus 105c und die Abschaltung des Schaltelements 130 realisiert wird.

Der zweite Abschaltpfad wird mittels der Halbleiterschalter 505a und 505b realisiert, wodurch die Spannungsversorgungsleitung 210 und die Masseversorgüngsleitung 514 abschaltbar sind. Durch die erfindungsgemäße Maßnahme, auch die Masseversorgung abschaltbar auszubilden, kann ein Kurzschluss der Ausgangsleitung 215 gegen die Spannungsversorgung die Sicherheitsfunktionalität des Segmentkreises nicht beeinträchtigen.

Weiterhin können Fehler im Ausgangskreis einfach und zuverlässig erkannt werden. Dazu können diverse Testmöglichkeiten verwendet werden.

Die beschriebene Ausführungsform der Erfindung bietet den Vorteil, dass weiterhin Standard-Feldbusklemmen verwendet werden können.

Es versteht sich, dass die vorstehend erläuterten bevorzugten Ausführungsformen des erfindungsgemäßen Verfahrens nur beispielhaft zu verstehen sind. Daneben sind für einen Fachmann weitere Lösungen denkbar, ohne den Rahmen der vorliegenden Erfindung zu verlassen.

### Bezugszeichen

- 100: Schaltungsanordnung
- 101, 201, 401: Sicherheitsklemme
- 102: prog. Sicherheitssteuerung
- 103: Feldbusmaster
- 104: Feldbus (Master)
- 105a, 105b, 105c: Inline Bus (Slave)
- 106a, 106b: Feldbuskopf
- 107, 108, 109, 110: Standard-Feldbusklemme
- 120, 200, 300; 400, 500: sicherheitsgerichteter Segmentkreis
- 121, 122, 123: Eingangsklemme
- 124, 125: Ausgangsklemme
- 130, 131: Schaltelement
- 202: Spannungsversorgungseingang
- 203: Masseversorgungseingang
- 204: Steuereinrichtung
- 205a, 205b: Schaltelement
- 210: Spannungsversorgungsleitung
- 211, 311: Einspeiseklemme
- 215, 216: Ausgangsleitung
- 212, 213: Schütz
- 214: Masseleitung
- 217: Rückmeldungsleitung
- 220: Versorgungsleitungen
- 301: Sicherheitsklemme
- 302: Spannungsversorgungseingang
- 310: Spannungsversorgungsleitung
- 305a, 305b: Halbleiterschalter
- 501: Sicherheitsklemme
- 502: Spannungsversorgungseingang
- 503: Masseversorgungseingang
- 504: Steuereinrichtung
- 505a, 505b: Halbleiterschalter
- 514: Masseversorgungsleitung

## Patentansprüche

1. Vorrichtung (501) zur sicherheitsgerichteten Abschaltung eines Segmentkreises (120) in einem Feldbus (105c), insbesondere Inline Bus (105c), mit wenigstens einem Spannungseingang (502) und wenigstens einem Masseeingang (503), wobei der Segmentkreis (120) über die Vorrichtung (501) mit dem wenigstens einen Spannungseingang (502) und dem wenigstens einen Masseeingang (503) verbunden ist, und mit einem ersten Schaltelement (505a) zum Unterbrechen einer Verbindung zwischen dem Spannungseingang (502) und dem Segmentkreis (120),
**gekennzeichnet durch**
ein zweites Schaltelement (505b) zum Unterbrechen der Verbindung zwischen dem Masseeingang (503) und dem Segmentkreis (120).

2. Vorrichtung (301) zur sicherheitsgerichteten Abschaltung eines Segmentkreises (120) in einem Feldbus (105c), insbesondere Inline Bus (105c), mit wenigstens einem Spannungseingang (302), mit dem der Segmentkreis (120) über eine erste Verbindung (210) verbunden ist, und mit einem ersten Schaltelement (305a) zum Unterbrechen der ersten Verbindung (210) zwischen dem Spannungseingang (302) und dem Segmentkreis (120),
**gekennzeichnet durch**
ein zweites Schaltelement (305b) zum Unterbrechen einer zweiten Verbindung (310) zwischen dem Spannungseingang (302) und dem Segmentkreis (120).

3. Vorrichtung (301; 501) nach Anspruch 1 oder 2, **dadurch gekennzeichnet, dass** wenigstens zwei Mikrocontroller zur Steuerung der Schaltelemente (305a, 305b; 505a, 505b) vorgesehen sind.

4. Vorrichtung (301; 501) nach Anspruch 3, **dadurch gekennzeichnet, dass** wenigstens ein Mikrocontroller zur Steuerung je eines Schaltelements (305a, 305b; 505a, 505b) vorgesehen ist.

5. Vorrichtung (301; 501) nach einem der vorstehenden Ansprüche, **dadurch gekennzeichnet, dass** wenigstens ein Schaltelement (305a, 305b; 505a, 505b) als Halbleiterschalter, insbesondere als unipolarer Transistor, ausgebildet ist.

6. Vorrichtung (301; 501) nach einem der vorstehenden Ansprüche, **dadurch gekennzeichnet, dass** sie zur Verbindung mit Feldbusklemmen (121 - 125) ausgebildet ist.

7. Vorrichtung (301; 501) nach einem der vorstehenden Ansprüche, **gekennzeichnet durch** Testelemente zur Fehleraufdeckung.

8. Verfahren zur sicherheitsgerichteten Abschaltung eines Segmentkreises in einem Feldbus, insbesondere Inline Bus, wobei der Segmentkreis mit einer Spannung und einer Masse versorgt wird, wobei zur sicherheitsgerichteten Abschaltung die Spannung zum Segmentkreis unterbrochen wird,
**dadurch gekennzeichnet , dass**
zur sicherheitsgerichteten Abschaltung die Masse zum Segmentkreis unterbrochen wird.

9. Verfahren nach Anspruch 8, **dadurch gekennzeichnet, dass** es in einer Interbusschaltungsanordnung durchgeführt wird.
